# EUROPEAN PATENT APPLICATION

(11) **EP 4 851 483 A1**
(43) Date of publication of application: **09.12.2026**
(21) Application number: 25180752.5
(22) Date of filing: 04.06.2025
(51) Int. Cl.: F16F 9/32

(54) **A CYLINDER TUBE ASSEMBLY, A SHOCK ABSORBER COMPRISING THE SAME AND A METHOD FOR PROVIDING A CYLINDER TUBE ASSEMBLY**

(71) Applicant: Öhlins Group AB, 194 27 Upplands Väsby (SE)
(72) Inventor: TORSTENSSON, Jonas, 194 44 Upplands Väsby (SE); NORSTEDT, Rickard, 189 37 Vallentuna (DE); RAMIC, Zlatan, 189 53 Sollentuna (SE)
(74) Representative: AWA Sweden AB

(57) **Abstract**

There is provided a cylinder tube assembly (100) for a vehicle shock absorber. The cylinder tube assembly (100) comprises a first cylinder (110) configured to form a damping fluid chamber of a vehicle shock absorber for receiving a piston of said vehicle shock absorber, which first cylinder (110) is made of a first material composition comprising a plastic material. The cylinder tube assembly (100) further comprises an outer shell (120) made of a second material composition comprising reinforcement fibres, wherein the first cylinder (110) is arranged at least partially within the outer shell (120) so that the outer shell (120) extends around the first cylinder (110) in a circumferential direction of said first cylinder (110). The first cylinder (110) and the outer shell (120) are fixedly attached to each other.

## Description

### TECHNICAL FIELD

The present disclosure generally relates to a cylinder tube assembly for a vehicle shock absorber, a vehicle shock absorber incorporating the same, and a method of providing cylinder tube assembly for a shock absorber.

### TECHNICAL BACKGROUND

Vehicle shock absorbers are essential components in vehicles, designed to dissipate energy by damping oscillatory motion. They typically operate by converting kinetic energy generated by movement or vibration into heat energy, which is then dissipated. By effectively dampening vibrations and oscillations, shock absorbers enhance vehicle handling, ensuring better stability during dynamic manoeuvres and unexpected driving conditions. They also improve vehicle dynamics by stabilizing the vehicle, ensuring tire-to-road contact, and reducing wear on other vehicle components. Collectively, these benefits create a safer, smoother, and more controlled driving experience.

In the field of shock absorber technology, it is in particular desirable to further improve performance of vehicles. However, this is difficult to do today without making sacrifices to other aspects, such as safety and/or comfort. Accordingly, there is a demand for new improved technology.

### SUMMARY

At least some of the above-mentioned drawbacks are at least partly overcome by the present disclosure according to the independent claims. Preferred embodiments are set forth in the dependent claims.

The inventive concept is based on the realisation that a cylinder tube assembly comprising a composite material may be utilized to provide a plurality of advantages over a conventional cylinder tube assembly wherein a cylinder tube of the conventional cylinder tube assembly is manufactured in a single metal material, such as aluminium. The choice of material for a cylinder tube typically involves trade-offs between factors such as strength, weight, corrosion resistance, and machinability. Some materials cannot be utilized due to significant machining challenges, making it difficult to reliably create threads that meets the required specifications, performance standards, and strength criteria. Moreover, it is challenging to provide a material that, in combination with the above criteria, has a sufficiently high sealing capacity to make it suitable for being used as a cylinder tube. However, the inventors of the present disclosure have realised that a composite material can be utilized to provide a cylinder tube assembly which is lightweight, has satisfactory structural strength, provides a sufficiently high sealing capacity, and facilitates machineability.

According to a first aspect of the present disclosure, a cylinder tube assembly for a vehicle shock absorber is provided. The cylinder tube assembly comprises a first cylinder configured to form a damping fluid chamber of a vehicle shock absorber for receiving a piston of said vehicle shock absorber, which first cylinder is made of a first material composition comprising a plastic material. The cylinder tube assembly further comprises an outer shell made of a second material composition comprising reinforcement fibres. The first cylinder is arranged at least partially within the outer shell so that the outer shell extends around the first cylinder in a circumferential direction of said first cylinder. The first cylinder and the outer shell are fixedly attached to each other. The cylinder tube assembly may advantageously be lightweight, have high mechanical strength, and facilitate machinability as follows. As the outer shell comprises a second material composition comprising reinforcement fibres, it may advantageously improve an overall mechanical strength of the cylinder tube assembly at a relatively low weight. Furthermore, the first cylinder may advantageously facilitate machinability (e.g., for threads for connecting to end caps or other components). So, the outer shell itself can be dedicated for providing mechanical strength without any constraint on machinability. As a result, a greater selection of materials can be used in the outer shell for providing enhanced mechanical strength. Sealing capacity may refer to an ability of an element to form an effective seal, preventing the passage of substances such as liquids or gases either through the element itself or along the interface of the element (e.g., where a sealing element, such as an O-ring, contacts the element's surface). The first material composition may thus facilitate the first cylinder in providing a sufficiently high sealing capacity to form an effective seal, both independently and in cooperation with a sealing member, for working pressures in a shock absorber comprising the cylinder tube assembly. The term reinforcement fibres may refer to a group of strong, durable materials for strengthen and/or improve mechanical properties of the outer shell and thereby the cylinder tube assembly. Examples of reinforcement fibres are carbon fibres, glass fibres, aramid fibres, natural fibres such as hemp, and basalt fibres. The first cylinder, as it is made of a material composition comprising a plastic material, may present machinable surfaces for providing threads for attaching further components. In addition, the cylinder tube assembly, as it comprises a first cylinder made of a first material composition comprising a plastic material, may provide a sufficiently high sealing capacity for effectively delimiting a fluid chamber in a vehicle shock absorber. Thereby, the composite assembly of reinforcement fibres and a plastic material can be used to provide a lightweight high performance cylinder tube suitable for being used in a vehicle shock absorber. As the first cylinder is made of a first material composition comprising a plastic material, the first cylinder may have an inherent sealing capability, and may thereby advantageously be used to delimit a fluid chamber. More specifically, the first material composition comprising a plastic material may be particularly advantageous because the first cylinder may inherit a sufficiently high sealing capacity while also providing an inner surface with a sufficiently low surface roughness to be used in combination with, for example, an O-ring or an alternative sealing element, for interface sealing. Interface sealing may refer to preventing leakage along an interface between two elements, such as between the first cylinder and the sealing element, e.g., in a longitudinal direction of the first cylinder or a radial direction of the first cylinder. Furthermore, by providing an outer shell comprising reinforcement fibres, the structural strength of the cylinder tube assembly can be made sufficiently strong to withstand the strain imposed on a cylinder tube during use in a vehicle shock absorber. The first cylinder and the outer shell are advantageously connected so as to provide the cylinder tube assembly according to the present disclosure. Said cylinder tube assembly is thereby suitable to be used within a shock absorber instead of a conventional cylinder tube made of metal for enabling a reduction of weight thereof. This may advantageously reduce an unsprung mass a vehicle utilising said shock absorber, which may improve said vehicle's fuel efficiency, handling and acceleration.

According to an embodiment, the first cylinder comprises an inner surface configured to provide a sealing interface with a piston of said vehicle shock absorber. As the first cylinder is made of a first material composition comprising a plastic material, the first cylinder may advantageously provide an inner surface with low friction. Low friction may facilitate smooth movement of a piston within the first cylinder, thus reduce, preferably minimize, wear and tear of the piston as well as the first cylinder. This may advantageously improve the efficiency and performance of a vehicle shock absorber comprising a cylinder tube assembly according to the present disclosure.

According to an embodiment, the plastic material of the first material composition of the first cylinder is a thermoplastic material. Thermoplastic materials have material properties beneficial for implementation in the first material composition. For example, a thermoplastic material can be repeatedly melted and reshaped upon heating and is flexible. This may be advantageous as it allows the first cylinder to be continuously reshaped during manufacturing. Furthermore, the use of a thermoplastic material may advantageously provide the first cylinder with good mouldability, as well as being easy to machine and mill. Thereby, threads may be machined on an inner surface of the first cylinder, enabling the cylinder tube assembly to be releasably attached to other components, such as end caps, of a vehicle shock absorber by threading. In addition, a thermoplastic material may be highly effective for making the first cylinder resistant to fluids so as to prevent damping fluid or the like from flowing through the cylindrical walls of the first cylinder. This may enable the cylinder tube assembly to delimit a fluid chamber.

According to an embodiment, the reinforcement fibres of the outer shell are carbon fibres. Carbon fibres may advantageously be used to provide high strength-to-weight-ratio. Moreover, carbon fibres have excellent structural strength and thermal stability. This may provide the outer shell with an improved ability to withstand relatively high mechanical loads as well as having an increased temperature resistance.

According to an embodiment, the carbon fibres of the outer shell are continuous carbon fibres. Continuous carbon fibres, or long carbon fibres, may refer to carbon fibres that are unbroken and extend substantially across the entire length of a composite structure or a material, in this case the outer shell. By providing continuous carbon fibres, the outer shell, as well as the cylinder tube assembly, is provided with an increased structural strength, stiffness, and durability compared to if provided with discontinuous or chopped fibres. Furthermore, their uninterrupted nature allows for efficient load transfer, making them particularly suitable for applications requiring high strength-to-weight ratios. Continuous carbon fibres may advantageously be provided in the outer shell, as they may offer the necessary strength for applications with relatively high strength requirements. Alternatively, in applications with lower strength requirements, short carbon fibres may provide an adequate level of strength.

According to an embodiment, the continuous carbon fibres are braided or woven or wound. Braiding the continuous carbon fibres may be advantageous to increase their ability to distribute mechanical load and thus increase the overall strength of the outer shell. Alternatively, the continuous carbon fibres may be provided in a woven configuration, wherein fibres are interlaced to form a structured grid. This woven structure may promote stability and durability. Alternatively, the continuous carbon fibres may be provided in a wound configuration, wherein the continuous carbon fibres have been arranged in a specific pattern by winding them, for example around a form or a mandrel. This winding pattern may promote stability and durability. Furthermore, by braiding the continuous carbon fibres, or providing them in a woven configuration, the continuous carbon fibres may advantageously be provided in a preform geometry. Preform geometry may refer to an initial shape, arrangement, or initial shape prior to final processing. Thereby, during manufacturing of the cylinder tube assembly, the preform geometry may be fitted onto the first cylinder, and can thereafter, for example, be consolidated to form the outer shell. Furthermore, the outer shell may be fixedly attached to the first cylinder from said consolidation. Providing continuous carbon fibres in a preform geometry may be further advantageous for promoting a matrix material flow during consolidation and increase overall performance of the finished cylinder tube assembly.

According to an embodiment, the first material composition of the first cylinder comprises carbon fibres, wherein optionally the carbon fibres of the first material composition are short carbon fibres, each short carbon fibre having a length preferably less than 10 mm, more preferably less than 1 mm. Short carbon fibres may refer to discrete, short-length carbon fibres typically 0.1-10 mm in length. Thereby, the first material composition is provided with an improved structural strength and stiffness, which in turn increases the structural strength and stiffness of the cylinder tube assembly. Short carbon fibres may advantageously be used to enhance the mechanical properties of the first cylinder without the need of cost and complexity needed of using long carbon fibres. Furthermore, short carbon fibres may facilitate processing and moulding, making them particularly advantageous for being included in the first material composition.

According to an embodiment, the second material composition of the outer shell comprises a matrix material, wherein optionally the matrix material is a plastic material. Matrix material may refer to a continuous phase for surrounding and binding the reinforcement fibres of the second material composition. The matrix material may provide enhanced load transfer, protection, shape, and/or stability. Using a plastic material, or a polymeric material, as a matrix material may be advantageous for providing high strength-to-weight ratio of the finished cylinder tube assembly. Furthermore, it may promote design flexibility of the outer shell as it can be moulded into various shapes. The matrix material may be provided into the outer shell in several ways. For instance, the matrix material may be provided by impregnating the reinforcement fibres with the matrix material. The reinforcement fibres may be impregnated with the matrix material before the reinforcement fibres are provided on the first cylinder or after being provided on the first cylinder. Thereafter, the reinforcement fibres may be consolidated into the outer shell. Alternatively, or in combination, the matrix material may be arranged on or by the first cylinder, whereafter the reinforcement fibres become impregnated once arranged thereon.

According to an embodiment, the second material composition of the outer shell comprises short carbon fibres, each short carbon fibre having a length preferably less than 10 mm, more preferably less than 1 mm. As carbon fibres may provide excellent mechanical properties, the structural strength and stiffness of the outer shell may be further increased.

According to an embodiment, the cylinder tube assembly further comprising a first protruding member fixedly attached to the outer shell, and which protrudes away from the outer shell. The first protruding member can advantageously be used to enable, for example, a machine to grip the cylinder tube assembly, and subsequently machine it. The first cylinder, as well as the outer shell, is sensitive to compression and may be damaged if gripped too tightly, thus the first protruding member can advantageously be used for this purpose. The cylinder tube assembly may advantageously be provided with a plurality of protruding members for facilitating machining of said cylinder tube assembly. The first protruding member may function as a mounting bracket to connect the cylinder tube to a vehicle part.

According to a second aspect of the disclosure, there is provided a shock absorber for a vehicle, comprising piston, and the cylinder tube assembly according to any preceding claim. This provides a shock absorber with the advantages inherited from the cylinder tube assembly as disclosed herein.

According to a third aspect of the disclosure, there is provided a method for manufacturing a cylinder tube assembly. The method comprising: providing a first cylinder configured to form a damping fluid chamber of a vehicle shock absorber for receiving a piston of said vehicle shock absorber, which first cylinder is made of a first material composition comprising a plastic material. The method is further comprising: providing an outer shell so that so that the first cylinder is arranged at least partially within the outer shell and is fixedly attached to the outer shell, wherein said providing an outer shell comprises one of a first process or a second process. The first process comprising: providing reinforcement fibres to the first cylinder according to a predetermined arrangement, consolidating the reinforcement fibres in the predetermined arrangement so as to form said outer shell directly on the first cylinder whereby said outer shell is fixedly attached to the first cylinder. The second process comprising: providing reinforcement fibres according to a predetermined arrangement, consolidating the reinforcement fibres in the predetermined arrangement so as to form the outer shell, fixedly attaching the outer shell to the first cylinder. This provides for an efficient method for providing a lightweight, high performance cylinder tube assembly according to the present disclosure. The first process may advantageously enable the outer shell to be formed by consolidation when the reinforcement fibres are arranged on the first cylinder. Thereby, the consolidation generates not only a hardening of the outer shell, but also that the outer shell fixedly attaches to the first cylinder. The term consolidation may refer to a process of densifying and strengthening a material, for example by applying heat and pressure so to remove voids and improve mechanical properties. The second process advantageously enables the forming of the outer shell by means of consolidation before said outer shell is arranged on the first cylinder. Thereafter, the outer shell can be fixedly attached to the first cylinder. This provides the advantage of that there is no kinematic interaction between the first cylinder and the outer shell when the outer shell is provided by consolidation. This may reduce the risk of the cylinder tube assembly receiving non evenly distributed wall thickness, material ruptures, waviness of the outer surface, delamination between the first cylinder and the outer shell, and other defects.

According to an embodiment, said fixedly attaching the outer shell to the first cylinder of the second process comprises laminating the outer shell to the first cylinder.

According to an embodiment, consolidating the reinforcement fibres in the predetermined arrangement so as to form said outer shell of the first process or the second process is performed using a matrix material. The matrix material serves as a binding agent that holds the reinforcement fibres in the outer shell together, enabling the effective transfer and distribution of mechanical forces throughout the outer shell and the cylinder tube assembly. The matrix material may protect the reinforcement fibres against environmental and mechanical damage, while also maintaining the shape and structural integrity of the outer shell. Additionally, the matrix material may provide the outer shell with beneficial properties such as thermal and electrical insulation, enhancing its durability and toughness.

According to an embodiment, said providing a first cylinder comprises moulding a material having said first material composition. Providing the first cylinder by moulding is a versatile and efficient method for producing the first cylinder while ensuring that it meets specific requirements and maintaining high quality and cost efficiency.

According to one embodiment, the first cylinder is manufactured by a moulding method comprising: providing a workpiece or raw material having the first material composition in a moulding apparatus; heating the plastic material to a processable temperature; introducing the heated plastic material into a mould cavity of a mould of the moulding apparatus to shape the material into a cylinder; allowing the material to cool and solidify within the mould cavity to form the desired shape of the cylinder. The raw material may be in the form of plastic pellets, granules, or sheets that are loaded into the moulding apparatus for processing. The material may be heated to the appropriate temperature for moulding, making it sufficiently soft or molten for shaping within the mould. The mould cavity may be designed to create a cylinder with a predetermined external and internal diameter. The mould may be a split mould or other suitable type for forming cylindrical shapes. The cooling process may be controlled to facilitate uniform cooling and prevent warping and/or deformation of the cylinder. The method may comprise adjusting a precise timing of material injection, pressure, and/or cooling rates. Alternatively, the first cylinder may be manufactured using a thermosetting plastic. The process of using a thermosetting plastic may involve providing a raw material having the first material composition and then applying heat to initiate a chemical reaction to cure the first material composition.

According to one embodiment, the method comprises adding carbon fibres before moulding, wherein the carbon fibres are optionally short carbon fibres.

According to one embodiment, the method further comprises: performing a post-forming treatment such as trimming, polishing, or surface finishing to improve the quality and appearance of the formed cylinder.

According to one embodiment, the method further comprises: introducing a mandrel or inner support to adjust the internal diameter of the cylinder, ensuring consistent hollow dimensions across the length of the cylinder.

According to one embodiment, the reinforcement fibres for the outer shell are provided according to a predetermined arrangement via an apparatus, such as a braiding machine or a filament winding machine. A braiding machine may advantageously provide the reinforcement fibres for the outer shell in a predetermined braid arrangement. A filament winding machine may advantageously provide the reinforcement fibres for the outer shell in a predetermined winding arrangement. The apparatus may be configured to be controllable by a control device. The control device may be configured to control the apparatus to provide the reinforcement fibres for the outer shell in the predetermined arrangement.

According to a fourth aspect, a computer program is provided. The computer program comprises instructions which, when the program is executed by a computer, cause the computer to carry out the method according to the third aspect or any embodiments thereof.

According to a fifth aspect, a computer-readable storage medium is provided. The computer-readable storage medium comprises instructions which, when executed by a computer, cause the computer to carry out the method according to the third aspect or any embodiments thereof.

Effects and features of the second and third and fourth and fifth aspects are largely analogous to those described above in connection with the first aspect. Embodiments mentioned in relation to the first aspect are largely compatible with the second and third and fourth and fifth aspects. It is further noted that the inventive concepts relate to all possible combinations of features unless explicitly stated otherwise. The invention is defined by the appended independent claims, with embodiments being set forth in the appended dependent claims, in the following description and in the drawings. It is to be understood that this disclosure is not limited to the particular component parts of the device described or steps of the methods described as such device and method may vary. It is also to be understood that the terminology used herein is for purpose of describing particular embodiments only and is not intended to be limiting. It must be noted that, as used in the specification and the appended claims, the articles "a", "an", "the", and "said" are intended to mean that there are one or more of the elements unless the context clearly dictates otherwise. Thereby, for example, reference to "a unit" or "the unit" may include several devices, and the like. Furthermore, the words "comprising", "including", "containing" and similar wordings do not exclude other elements or steps.

### BRIEF DESCRIPTION OF THE DRAWINGS

The disclosure is described in the following illustrative and non-limiting detailed description of exemplary embodiments, with reference to the appended drawings, wherein:
Fig. 1 shows a schematic cross-sectional view along a longitudinal section of a cylinder tube assembly according to the present disclosure.
Fig. 2 shows a schematic cross-sectional view along a transversal section of a cylinder tube assembly according to the present disclosure.
Fig. 3 shows a schematic cross-sectional view along a longitudinal section of a shock absorber comprising a cylinder tube assembly according to the present disclosure.
Fig. 4 shows a schematic flow chart of a method of the present disclosure.

### DETAILED DESCRIPTION OF EMBODIMENTS

Hereinafter, the disclosure in various aspects will be described with reference to the illustrative drawings. All figures are schematic, not necessarily to scale, and generally only show parts which are necessary in order to elucidate the disclosure, wherein other parts may be omitted or merely suggested. Throughout the figures the same reference signs designate the same, or essentially the same features. Various elements and arrangements are schematically depicted in the drawings for purposes of explanation only and so as to not obscure the description with details that are well known to those skilled in the art. Nevertheless, the attached drawings are included to describe and explain illustrative examples of the disclosed subject matter. The words and phrases used herein should be understood and interpreted to have a meaning consistent with the understanding of those words and phrases by those skilled in the relevant art. No special definition of a term or phrase, i.e., a definition that is different from the ordinary and customary meaning as understood by those skilled in the art, is intended to be implied by consistent usage of the term or phrase herein. To the extent that a term or phrase is intended to have a special meaning, i.e., a meaning other than that understood by skilled artisans, such a special definition will be expressly set forth in the specification in a definitional manner that directly and unequivocally provides the special definition for the term or phrase.

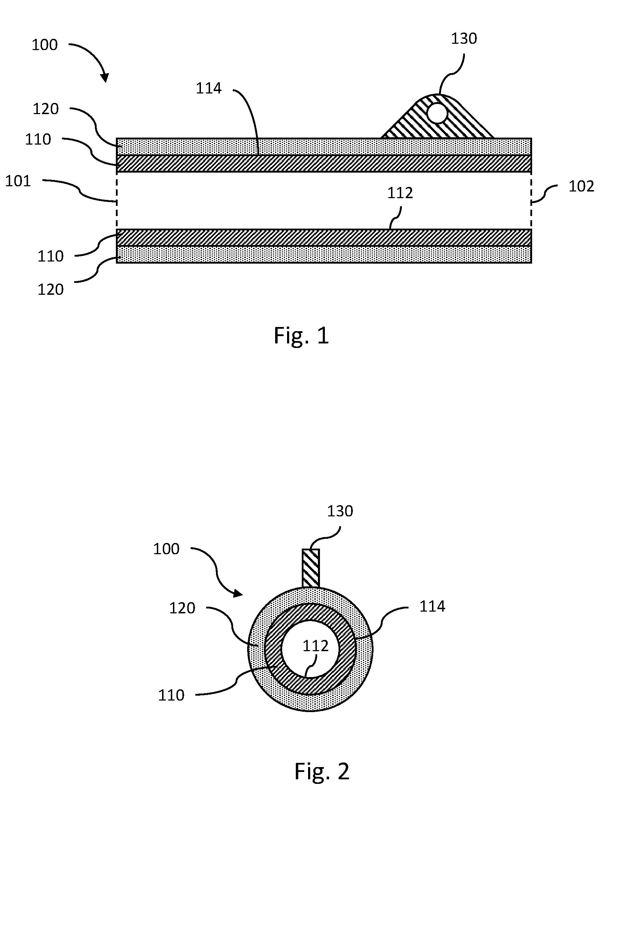

Figs. 1 and 2 show a first exemplary embodiment in accordance with a first aspect of the present disclosure of a cylinder tube assembly 100 for a vehicle shock absorber. In Fig. 1, a cross-sectional view of a longitudinal section of the cylinder tube assembly 100 is shown. In Fig. 2, a cross-sectional view of a transversal section of the cylinder tube assembly 100 is shown. The cylinder tube assembly 100 has a longitudinal extension from a first end 101 to a second end 102. The second end 102 is longitudinally opposite to the first end 101. The cylinder tube assembly 100 comprises a first cylinder 110 configured to form a damping fluid chamber of a vehicle shock absorber. The first cylinder 110 is configured to receive a piston of said vehicle shock absorber. In the shown embodiment, the first cylinder 110 extends from the first end 101 of the cylinder tube assembly to the second end 102 of the cylinder tube assembly 100. The first cylinder 110 has a cylindrical tube shape which may be described as a cylindrical structure having a circular cross section and a uniform thickness. The first cylinder 110 is illustrated with an empty interior and is open at both ends thereof 101, 102. The first cylinder 110 is made of a first material composition comprising a plastic material. The plastic material may be selected from a group comprising a thermoplastic, a thermosetting plastic, or other suitable plastic materials. The cylinder tube assembly 100 comprises an outer shell 120 made of a second material composition comprising reinforcement fibres. The reinforcement fibres may be selected from a group comprising of carbon fibres, aramid fibres, glass fibres, natural fibres such as hemp, or other suitable fibres. The reinforcement fibres are arranged within the second material composition so as to provide an increase of structural strength and stiffness to the cylinder tube assembly 100. Preferably, the reinforcement fibres of the outer shell 120 are evenly distributed. The reinforcement fibres 120 may preferably be arranged within the outer shell in a formation that provides rigidity and stability. The reinforcement fibres may be held in place by an additional material, for example a plastic material. The first cylinder 110 is arranged at least partially within the outer shell 120 so that the outer shell 120 extends around the first cylinder 110 in a circumferential direction of said first cylinder 110. The first cylinder 110 may serve as a core structure, while the outer shell 120 extends around the first cylinder 120 in a circumferential direction. The outer shell 120 may be positioned concentrically with the first cylinder 110, such that it surrounds, or at least partially encircles, an outer surface 114 of the first cylinder 110. In the shown embodiment, the outer shell 120 is a continuous structure. It may be formed as a segmented structure. The first cylinder 110 and the outer shell 120 are fixedly attached to each other. In the shown embodiment, the first cylinder 110 and the outer shell 120 are fixedly attached by means of consolidation. It is conceivable that they are attached by other means, for example by the use of adhesives.

According to an embodiment, the outer shell 120 is adapted in size and shape to form a second cylinder. Alternatively, the outer shell may have a non-cylindrical outer shape while retaining an inner cylindric surface that engages with the first cylinder 110 at the outer surface 114 thereof.

According to an embodiment, the first cylinder 110 and the outer shell 120 are co-axial. Alternatively, the first cylindered 110 and the outer shell 120 may be off-axis while retaining that an inner cylindric surface of the outer shell 120 is co-axial with the first cylinder so to maintain the outer shells 120 capacity to align and engaging with the first cylinder 110.

According to an embodiment, the first cylinder 110 comprises an inner surface 112 configured to provide a sealing interface with a piston of said vehicle shock absorber. The inner surface 112 of the first cylinder 110 may be defined as an interior cylindrical boundary for a damping fluid chamber of a shock absorber. The inner surface 112 is extending along the longitudinal extension of the first cylinder 110 and is designed to interact with a piston moving within it. The inner surface 112 may adapted to provide a sealing interface with the piston. Such sealing interface may ensure that the inner surface 112 is shaped so to form an effective seal together with the piston, thereby preventing leakage of damping fluid leakage over the piston. Furthermore, the inner surface 112 of the first cylinder, made of the first material composition comprising a plastic material, may advantageously be provided with relatively low friction. This may facilitate easy sliding of a piston moving within it. In this context, the friction coefficient µ of the inner surface may be equal or less than 0.12, more preferably equal or less than 0.1, and most preferably equal or less than 0.005. Low friction may be advantageous for minimizing wear and tear of the cylinder tube assembly 100 as well as the piston moving within it.

According to an embodiment, the plastic material of the first material composition of the first cylinder 110 is a thermoplastic material. The thermoplastic material may be a moulded liner. Furthermore, the thermoplastic material may be a polyaryletherketone (PAEK). More specifically, it may be a Polyetheretherketone (PEEK). Furthermore, it is conceivable that the first material composition further comprises additives such as graphite and or Polytetrafluoroethylene (PTFE) for reducing surface friction of the inner surface 112, which may improve a gliding capability of a piston moving within the cylinder tube assembly 100.

According to an embodiment, the reinforcement fibres of the outer shell 120 are carbon fibres. More specifically, the carbon fibres are continuous carbon fibres. The continuous carbon fibres are braided so as to form a preform geometry. The manner in which the continuous carbon fibres are braided may be characterized in terms of degree of laydown. Degree of laydown may refer the angle at which the reinforcement fibres are oriented relative to the axis of the braided structure. The degree of laydown determines how tightly or loosely the reinforcement fibres are interlaced, which in turn influences the structural stiffness, strength, and flexibility of the braided structure. In this particular embodiment, the reinforcement fibres being continuous carbon fibres have been found advantageous for providing a braided preform geometry with a relatively high strength-to-weight-ratio. In this embodiment, the continuous carbon fibres may be woven or braided. As a non-limiting example, the continuous carbon fibres may be braided with a 40 - 60 degree laydown, more preferably, the continuous carbon fibres may be braided with a 50 - 60 degree laydown, and most preferably, the continuous carbon fibres may be braided with a 54.7 degree laydown. Alternatively, the continuous carbon fibres may be woven so as to form a preform geometry. Alternatively, the continuous carbon fibres may be wound so as to form a preform geometry. The continuous carbon fibres may have thickness ranging from about 5 to 10 micrometres. It is conceivable to provide the same degree of laydown for other types of reinforcement fibres. The continuous carbon fibres may be provided in a tow comprising a plurality of individual continuous fibres. The tow may comprise a plurality of continuous fibres in the range of 1000-50000.

According to an embodiment, the first material composition of the first cylinder 110 comprises carbon fibres, wherein optionally the carbon fibres of the first material composition are short carbon fibres, each short carbon fibre having a length preferably less than 10 mm, more preferably less than 1mm. The first material composition of the first cylinder 110 may comprise at least 10%, preferably at least 20%, or most preferably at least 30% short carbon fibres.

According to an embodiment, the second material composition of the outer shell 120 comprises a matrix material. By matrix material it may be meant a continuous phase that surrounds and binds together reinforcement materials in composite materials. In this embodiment, the matrix material is a plastic material. By plastic material it may be meant a polymeric material. The plastic material may be a thermoplastic material. The thermoplastic material may be polypropylene and polyethylene, as well as thermosetting resins like epoxy, polyester, and vinyl ester. The thermoplastic material may be a polyaryletherketone (PAEK). More specifically, it may be a Polyetheretherketone (PEEK).

According to an embodiment, the second material composition of the outer shell 120 comprises short carbon fibres, each short carbon fibre having a length preferably less than 10 mm, more preferably less than 1 mm.

According to an embodiment, the cylinder tube assembly 100 comprising a first protruding member 130 fixedly attached to the outer shell 120, and which protrudes away from the outer shell 120. The protruding member 130 may be laminated to the outer shell 120. Alternatively, the first protruding member 130 may be consolidated to be fixedly attached to the outer shell 120. The first protruding member 130 may be fixedly attached to the outer shell 120 by welding. The protruding member 130 may preferably be made of a plastic, such as PAEK. Thereby, the protruding member 130 may be clamped into a machinery during the manufacturing process. This may ensure that neither the first cylinder 110 nor the outer shell 120 are damaged by the clamping force of the machinery. It is conceivable that the cylinder tube assembly 100 comprises a plurality of protruding members so to facilitate said cylinder tube assembly 100 being clamped by a machine without receiving damage from clamping. In this embodiment, the first protruding member 130 is a mounting bracket arranged to be connected to a frame of a vehicle.

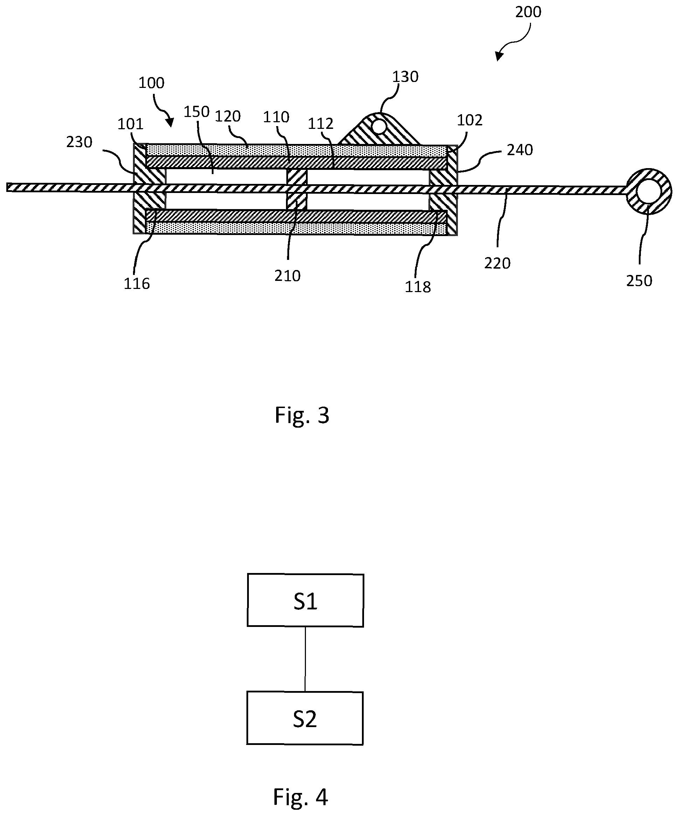

Now with reference to Fig. 3, according to a second aspect of the present disclosure, there is provided a shock absorber 200 for vehicle comprising a piston 210 and the cylinder tube assembly 100 as disclosed herein. The piston 210 is slidably arranged within the cylinder tube assembly 100 such that it is movable relative to the cylinder tube assembly 100 in the longitudinal direction thereof. The cylinder tube assembly 100 comprises a fluid chamber 150. The piston 210 is arranged inside the cylinder tube assembly 100 so that the piston 210 divides the hydraulic chamber 150 into a rebound chamber and a compression chamber. The shock absorber 200 further comprises a piston rod 220 which is fixedly connected to the piston 210. In the shown embodiment, the piston rod 220 is a through-rod, meaning that it extends though opposite ends of the hydraulic chamber 150 throughout its intended range of motion. In an alternate embodiment of a vehicle shock absorber, the rod may be a conventional rod without the specific characteristic of extending through both ends of the hydraulic chamber. Damping fluid may flow through a valve arrangement (not shown) between the rebound chamber and the compression chamber as an effect from piston movement in relation to the cylinder tube assembly 100. The valve arrangement may comprise one or more as well as damping fluid flow paths through the piston 210 and or the piston rod 220 so to fluidly connect the compression chamber and the rebound chamber. The first cylinder 110 may be machined so to provide threads at the inner surface 112 at a first outer end portion 116 thereof. The first cylinder 110 may further provide threads at the inner surface 112 at a second outer end portion 118 thereof. The shock absorber 200 further comprises a first end cap 230, and a second end cap 240. The first end cap 230 is threadedly engaged to the cylinder tube assembly 100 by threaded connected at the first outer end portion 116 of the inner surface 112. The second end cap 240 is threadedly engaged to the cylinder tube assembly 100 at the second outer end portion 118 of the inner surface 112. The first and second end caps 230, 240 are arranged to delimit the outer ends of the hydraulic chamber 150. The shock absorber 200 further comprises a second mounting bracket 250 at an end of the piston rod 220. The shown embodiment of a vehicle shock absorber 200 is a steering damper and may be arranged to dampen steering vibrations. The first mounting bracket 130 is arranged to be mounted to a frame of a vehicle, and the second mounting bracket 250 is arranged to be mounted to a handlebar of the vehicle. It is conceivable that the cylinder tube assembly 100 of the present disclosure is comprised in other types of vehicles shock absorbers.

Now with reference to Fig. 4, in accordance with a third aspect of the present disclosure, there is provided a method for manufacturing a cylinder tube assembly 100. The method comprises providing S1 a first cylinder 110 configured to form a damping fluid chamber of a vehicle shock absorber for receiving a piston of said vehicle shock absorber, which first cylinder 110 is made of a first material composition comprising a plastic material. The first cylinder 110 may be provided by drilling a centred positioned hole in a cylindrical blank. Cylindrical blank may refer to a solid cylindrical piece of material that serves as a starting point for a manufacturing process. The method further comprises providing S2 an outer shell 120 so that the first cylinder 110 is arranged at least partially within the outer shell 120 and is fixedly attached to the outer shell 120, wherein said providing an outer shell 120 comprises one of a first process or a second process. The first process comprises providing reinforcement fibres to the first cylinder 110 according to a predetermined arrangement and consolidating the reinforcement fibres in the predetermined arrangement so as to form said outer shell 120 directly on the first cylinder 110 whereby said outer shell is fixedly attached to the first cylinder 110. Providing reinforcement fibres in a predetermined arrangement may refer to organizing and aligning the reinforcement fibres in a specific pattern or orientation. This arrangement may be carefully designed to achieve desired mechanical properties and performance characteristics of the cylinder tube assembly 100. The predetermined arrangement may refer to the orientation of reinforcement fibres in specific directions or the layering of reinforcement fibres in a specific sequence. For example, reinforcement fibres may be braided, aligned unidirectionally, arranged in a woven configuration, or placed in a multi-directional layout to optimize structural strength, stiffness, and flexibility. By predetermined arrangement it may be meant a preform geometry. Furthermore, the first process refers to providing the reinforcement fibres directly on the first cylinder 110. During this step, the assembly of reinforcement fibres arranged on the first cylinder 110 and said first cylinder 110 may be positioned onto a mould or a tool. Thereafter, the reinforcement fibres may be consolidated while positioned on the first cylinder 110 so to form the outer shell 120. Consolidation may be performed by the application of heat and pressure so that the reinforcement fibres, and for example a matrix material, are consolidated. Consolidation may remove voids and ensure proper bonding of the outer shell 120. The first process may advantageously bind the outer shell 120 to the first cylinder 110 by means of a single consolidation. Once the outer shell 120 has cured, it may be allowed to cool, which helps it solidify further. After cooling, the cylinder tube assembly 100 may be removed from the mould or tool.

The second process comprising providing reinforcement fibres according to a predetermined arrangement, consolidating the reinforcement fibres in the predetermined arrangement so as to form the outer shell 120, and fixedly attaching the outer shell 120 to the first cylinder 110. The second process may refer to providing the reinforcement in a predetermined arrangement and consolidating it before it is arranged on the first cylinder 110. That is, the reinforcement fibres may be arranged in a preform geometry which is consolidated independently from the first cylinder 110. The preform geometry may have a cylindrical shape with a hollow interior. When consolidating the preform geometry so to form the outer shell 120, the outer shell 12 may have a cylindrical shape with a hollow interior. This may be expressed as a first consolidation. After providing the outer shell 120, the first cylinder 110 may be inserted inside the hollow interior of said outer shell 120. The second process further comprises fixedly attaching the outer shell to the first cylinder 110 of the second process comprises laminating the outer shell 120 to the first cylinder 110. Laminating the outer shell 120 to the first cylinder 110 may be done by using adhesives, or heat and pressure to achieve the bond. It is conceivable that the outer shell 120 and the first cylinder 110 are laminated through consolidation. This may be expressed as a second consolidation.

In accordance with an embodiment, said consolidating the reinforcement fibres in the predetermined arrangement so as to form said outer shell 120 of the first process or the second process is performed using a matrix material. The matrix material, which may be a thermoplastic, is applied to the reinforcement fibres. This may be done through impregnation of the reinforcement fibres. Impregnation of the reinforcement fibres may refer to the process of thoroughly saturating the reinforcement fibres with the matrix material and which thereafter cures under heat and pressure to ensure proper bonding so to form the outer shell 120.

Saturating the reinforcement fibres with the matrix material may for example be performed by that the matrix material is manually applied to the reinforcement fibres. An alternative approach to apply the matrix material to the reinforcement fibres involves using pre-impregnated materials, known as prepregs, where the reinforcement fibres are coated with a partially cured matrix material before being arranged in the predetermined arrangement. These pre-impregnated reinforcement fibres may be arranged in the predetermined arrangement and thereafter cured under heat and pressure to form the outer shell 120. An alternative approach to apply the matrix material may involve providing the matrix material in the first material composition of the first cylinder 110. Thereafter, the reinforcement fibres may be arranged in a predetermined arrangement on the first cylinder 110 and thereafter cured by the matrix material in the first material composition under heat and pressure to form the outer shell 120.

In accordance with an embodiment, said providing a first cylinder 110 comprises moulding a material having said first material composition. Providing the first cylinder 110 by moulding may involve using a cylindrical mould cavity into which a material, such as molten plastic, is poured or injected. Once the material fills the mould and solidifies or cures, the mould may be opened to release the solid cylindrical blank, which can then undergo further processing or machining so to provide the first cylinder 110.

In the drawings and specification, there have been disclosed preferred embodiments and examples of the disclosure and, although specific terms are employed, they are used in a generic and descriptive sense only and not for the purpose of limitation, the scope of the invention being set forth in the following claims. The present disclosure has mainly been described above with reference to a few embodiments. However, as is readily appreciated by a person skilled in the art, other embodiments than the ones disclosed above are equally possible within the scope of the present disclosure, as defined by the appended claims. Although features and elements are described above in particular combinations, each feature or element can be used alone without the other features and elements or in various combinations with or without other features and elements. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfil the functions of several items recited in the claims. The mere fact that certain features are recited in mutually different dependent claims does not indicate that a combination of these features cannot be used to advantage. Any reference signs in the claims should not be construed as limiting the scope.

## Claims

1. A cylinder tube assembly (100) for a vehicle shock absorber, the cylinder tube assembly (100) comprising:
a first cylinder (110) configured to form a damping fluid chamber of a vehicle shock absorber for receiving a piston of said vehicle shock absorber, which first cylinder (110) is made of a first material composition comprising a plastic material; and
an outer shell (120) made of a second material composition comprising reinforcement fibres,
wherein the first cylinder (110) is arranged at least partially within the outer shell (120) so that the outer shell (120) extends around the first cylinder (110) in a circumferential direction of said first cylinder (110),
wherein the first cylinder (110) and the outer shell (120) are fixedly attached to each other.

2. A cylinder tube assembly (100) according to any preceding claim, wherein the first cylinder (110) comprises an inner surface (112) configured to provide a sealing interface with a piston of said vehicle shock absorber.

3. A cylinder tube assembly (100) according to any one of claims 1-2, wherein the plastic material of the first material composition of the first cylinder (11) is a thermoplastic material.

4. A cylinder tube assembly (100) according to any preceding claim, wherein the reinforcement fibres of the outer shell (120) are carbon fibres.

5. A cylinder tube assembly (100) according claim 4 wherein the carbon fibres of the outer shell (120) are continuous carbon fibres.

6. A cylinder tube assembly (100) according to claim 5, wherein the continuous carbon fibres are braided or woven or wound.

7. A cylinder tube assembly (100) according to any preceding claim, wherein the first material composition of the first cylinder (110) comprises carbon fibres, wherein optionally the carbon fibres of the first material composition are short carbon fibres, each short carbon fibre having a length preferably less than 10 mm, more preferably less than 1mm.

8. A cylinder tube assembly (100) according to any preceding claim, wherein the second material composition of the outer shell (120) comprises a matrix material, wherein optionally the matrix material is a plastic material.

9. A cylinder tube assembly (100) according to any preceding claim, wherein the second material composition of the outer shell (120) comprises short carbon fibres, each short carbon fibre having a length preferably less than 10 mm, more preferably less than 1 mm.

10. A cylinder tube assembly (100) according to any preceding claim, further comprising a first protruding member (130) fixedly attached to the outer shell (120), and which protrudes away from the outer shell (120).

11. A shock absorber (200) for a vehicle, comprising:
a piston (210), and
the cylinder tube assembly (100) according to any preceding claim.

12. A method for manufacturing a cylinder tube assembly (100), comprising:
- providing (S1) a first cylinder (110) configured to form a damping fluid chamber of a vehicle shock absorber for receiving a piston of said vehicle shock absorber, which first cylinder (110) is made of a first material composition comprising a plastic material;
- providing (S2) an outer shell (120) so that so that the first cylinder (110) is arranged at least partially within the outer shell (120) and is fixedly attached to the outer shell (120),
wherein said providing an outer shell (120) comprises one of the following:
a first process comprising:
∘ providing reinforcement fibres to the first cylinder (110) according to a predetermined arrangement,
∘ consolidating the reinforcement fibres in the predetermined arrangement so as to form said outer shell (120) directly on the first cylinder (110) whereby said outer shell is fixedly attached to the first cylinder (110),
or a second process comprising:
∘ providing reinforcement fibres according to a predetermined arrangement,
∘ consolidating the reinforcement fibres in the predetermined arrangement so as to form the outer shell (120),
∘ fixedly attaching the outer shell (120) to the first cylinder (110).

13. A method according to claim 12, wherein said fixedly attaching the outer shell to the first cylinder (110) of the second process comprises laminating the outer shell (120) to the first cylinder (110).

14. A method according to any of claims 12 or 13, wherein said consolidating the reinforcement fibres in the predetermined arrangement so as to form said outer shell (120) of the first process or the second process is performed using a matrix material.

15. A method according to any of claims 12 to 14, wherein said providing a first cylinder (110) comprises moulding a material having said first material composition.
